# EUROPEAN PATENT APPLICATION

(11) **EP 1 455 505 A1**
(43) Date of publication of application: **08.09.2004**
(21) Application number: 04005429.8
(22) Date of filing: 08.03.2004
(51) Int. Cl.: H04M 1/02, H04N 7/14, H04M 1/725

(54) **Foldable portable terminal with a camera module**

(30) Priority: 06.03.2003 KR 2003014151
(71) Applicant: Samsung Electronics Co., Ltd., Suwon-si, Gyeonggi-do (KR)
(72) Inventor: Park, Jun-Sang, Yeongtong-gu, Suwon-si, Gyeonggi-do (KR); Lee, Chang-Soo, Yeongtong-gu, Suwon-si, Gyeonggi-do (KR); Park, Seung-Min, Yeongtong-gu, Suwon-si, Gyeonggi-do (KR); Kim, Sung-Kwon, Yeongtong-gu, Suwon-si, Gyeonggi-do (KR); Kim, Jun, Yeongtong-gu, Suwon-si, Gyeonggi-do (KR)
(74) Representative: Grünecker, Kinkeldey, Stockmair & Schwanhäusser Anwaltssozietät

(57) **Abstract**

A portable terminal is disclosed. In the portable terminal, a first housing (10) extends lengthwise and a hinge housing (30) is installed at an end of the first housing, for defining a first hinge axis (A1) along a width direction of the first housing and a second hinge axis (A2) perpendicular to the first hinge axis. A second housing (20) is connected to the first housing by the hinge housing, for rotating about the first hinge axis to an opened state or a closed state with respect to the first housing. A subhousing (40) has a cylindrical camera module (41) along the first hinge axis and is mounted lengthwise to the outer surface of the first housing.

## Description

### BACKGROUND OF THE INVENTION

The present invention relates generally to a portable terminal, and in particular, to a portable terminal in which a sub-housing has a camera module installed in a direction perpendicular to a lengthwise central axis of a main housing.

In general, a portable terminal refers to a device by which a user wirelessly communicates with the other party, carrying it. The portable terminal includes HHP (Hand Held Products), CT-2 (Cordless Telephone-2), cellular phones, digital phones, PCS (Personal Communication Service), and PDA (Personal Digital Assistant). They are categorized into a bar type, a flip type, and a folder type according to their outward appearance. The bar type has a single housing shaped like a bar, the flip type has a flip or cover rotatably connected to a bar-type housing by a hinge device, and the folder type has a folder rotatably connected to a bar-type housing by a hinge device.

Each conventional portable terminal is comprised of an antenna, a data input/output device, and a data transmitter/receiver. The data input/output device is usually a keypad for entering data by finger touch. A touch pad or a touch screen is also used as the data input/output device. A display function is realized by use of an LCD (Liquid Crystal Display) in the data output device. For video calls or photography, a camera lens is used in the portable terminal. Recently, the flip type or the folder type has been popular as a portable terminal focusing on voice or video communication. Due to the advantages of excellent sound sensitivity, small size, and light weight, the flip type and folder type are being widespread. A conventional folder-type portable terminal includes a main body with keys and a microphone, a folder with an LCD and a speaker, and a hinge device for mechanically connecting the main body to the folder such that the folder can rotate upward from the main body. A camera module is installed at a predetermined position of the hinge device, for video call.

Since a camera lens is fixed to the main body or the hinge device in the conventional portable terminal, the angle of view of the lens is limited to one direction and thus the user must often assume an inconvenient pose in order to photograph an object.

Moreover, when the camera lens integrated into the conventional portable terminal functions as a camcorder, the object is typically photographed with the main body and the folder positioned at a right angle, and the image is displayed on the LCD of the folder. Since the camera lens is fixed to the main body, the main body and the folder must be moved together to photograph an object. Therefore, it is impossible to photograph the object at an intended height and angle in a narrow place.

A further shortcoming of the conventional portable terminal is battery capacity, which is insufficient to photograph many still images or to photograph a moving picture for a long time when the portable terminal is used for digital camera/camcorder functionality.

### SUMMARY OF THE INVENTION

It is, therefore, an object of the present invention to provide a portable terminal having a camera module installed in a sub-housing, perpendicular to the lengthwise central axis of a main housing in order to improve digital camera/camcorder functionality.

It is another object of the present invention to provide a portable terminal having a camera module installed in a detachable sub-housing, perpendicular to the lengthwise central axis of a main housing, so that an object can be photographed at a desired height and angle by detaching the sub-housing from the portable terminal.

It is a further object of the present invention to provide a portable terminal having an in-built battery and a detachable large-capacity battery in order to photograph a moving object for a long time according to the capacities of the batteries.

The above objects are achieved by a portable terminal according to claim 1. Therein a first housing extends lengthwise, a hinge housing is installed at an end of the first housing, for defining a first hinge axis along the width direction of the first housing and a second hinge axis perpendicular to the first hinge axis, a second housing is connected to the first housing by the hinge housing, for rotating about the first hinge axis to an opened state or a closed state with respect to the first housing, and a sub-housing has a cylindrical camera module along the first hinge axis and is mounted lengthwise to an outer surface of the first housing.
Further advantageous embodiments are according to the dependent claims.

### BRIEF DESCRIPTION OF THE DRAWINGS

The above and other objects, features and advantages of the present invention will become more apparent from the following detailed description when taken in conjunction with the accompanying drawings in which:
FIG. 1 is a perspective view of a portable terminal with a second housing closed to a first housing according to an embodiment of the present invention;
FIG. 2 is a perspective view of the portable terminal with the second housing opened at 90 degrees about a first hinge axis according to the embodiment of the present invention;
FIG. 3 is a perspective view of the portable terminal with the second housing rotated about a second hinge axis according to the embodiment of the present invention;
FIG. 4 is a perspective view of a portable terminal with a sub-housing removed from the first housing and thus short-range communication modules activated according to a second embodiment of the present invention;
FIG. 5 is a perspective view of the portable terminal with the sub-housing removed therefrom and a large-capacity battery attached thereto according to the second embodiment of the present invention;
FIG. 6 is a perspective view of the portable terminal operating as a mobile phone according to the second embodiment of the present invention;
FIG. 7 is a perspective view of the portable terminal with the sub-housing removed therefrom to photograph an object according to the second embodiment of the present invention; and
FIG. 8 is a perspective view of the portable terminal with the sub-housing removed therefrom to photograph an object at a desired height and angle according to the second embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail to avoid obscuring the invention with unnecessary detail.

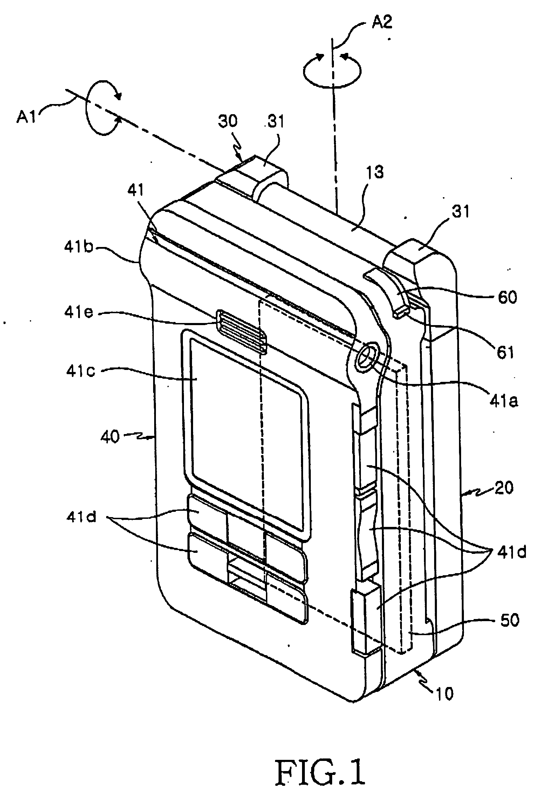

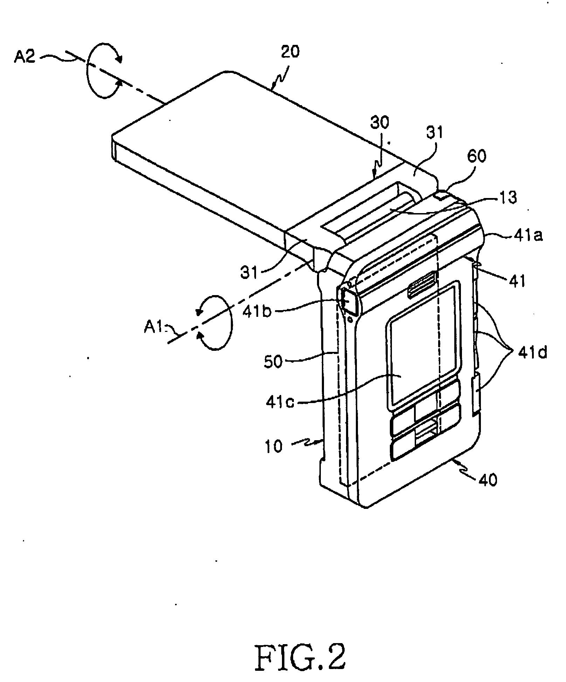

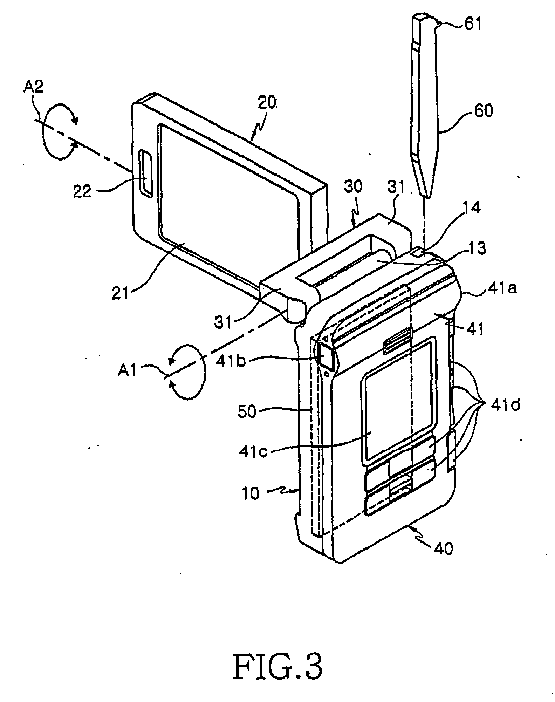

Referring to FIGS. 1, 2 and 3, a portable terminal according to an embodiment of the present invention includes a first housing 10, a second housing 20, a hinge housing 30, and a sub-housing 40. A plurality of keys 11 and a microphone 12 are provided in the first housing 10. An LCD 21 and a speaker 22 are disposed on the second housing 20. The second housing 20 is connected to the first housing 10 by the hinge housing 30 such that the second housing 20 rotates about a first hinge axis A1 to an opened or closed state with respect to the first housing 10. The hinge housing 30 defines the first hinge axis A1, and a second hinge axis A2 about which the second housing 20 rotates perpendicularly to the first hinge axis A1.
The sub-housing 40 is provided with a camera module 41 at a predetermined position along the first hinge axis A1 to realize video call, camera phone, and camcorder functionalities. The sub-housing 40 is mounted lengthwise on an outer surface of the first housing 10 with the first and second housings having respective inner surfaces that face each other when the portable terminal is in the closed state. A rechargeable built-in battery 50 is preferably provided in the first housing 10 to supply power. A center hinge arm 13 is formed at the upper center of the first housing 10. A pair of side hinge arms 31 protrude from both sides of the hinge housing 30 and are combined with the center hinge arm 13, for defining the first hinge axis A1 and rotating the second housing 20 about the first hinge axis A1. A touch pen 60 is inserted into a hole 14 of the first housing 10. A protrusion 61 is formed at the tip of the touch pen 60 to be caught at the entrance of the hole 14.

The camera module 41 includes a digital camera lens 41a at an end and a viewfinder 41b at the other end to allow the user to view a captured object. A sub-LCD 41c is arranged lengthwise in the sub-housing 40. At least one operation key 41d is provided in the sub-housing to operate the camera module 41. A scroll key 41e is disposed at a predetermined position of the front surface of the sub-housing 40, to select a menu.

The operation of the thus-constituted portable terminal will be described with reference to FIGS. 1, 2 and 3.

As illustrated in FIG. 1, the portable terminal is comprised of the first and second housings 10 and 20, the hinge housing 30, and the sub-housing 40.

In a digital camera/camcorder mode, the second housing 20 is rotated about the first hinge axis A1 to an open state with respect to the first housing 10 and then rotated perpendicularly to the first hinge axis A1, that is, about the second hinge axis A2 with the aid of the side hinge arms 31 and the center hinge arm 13, such that the user can view the LCD 21.

In this state, the user photographs an object captured using the camera module 41. The sub-housing 40 is disposed along the length of the first housing 10 and the camera module 41 is perpendicular to the lengthwise central axis of the first housing 10. Since the camera module 41 has the camera lens 41a at one end and the viewfinder 41b at the other end, the user captures the object through the viewfinder 41b and photographs the object through the camera lens 41a.

The photographed still image or moving picture is displayed on the LCD 21 of the second housing 20.

Even if the second housing 20 is closed to the first housing 10 in the reverse order to the above-described procedure, the user can photograph the object through the camera lens 41a, as viewed through the viewfinder 41b. The photographed still image or moving picture is displayed on the sub-LCD 41c arranged lengthwise in the sub-housing 40.
Meanwhile, the user can take out the touch pen 60 from the hole 14 of the first housing 10 and select between a menu mode and an operation mode by touching the sub-LCD 41c with the touch pen 60.

In accordance with the first embodiment of the present invention, the digital camera/camcorder functionality is improved by use of the sub-housing 40 with the camera module 41 perpendicular to the lengthwise central axis of the first housing 10.

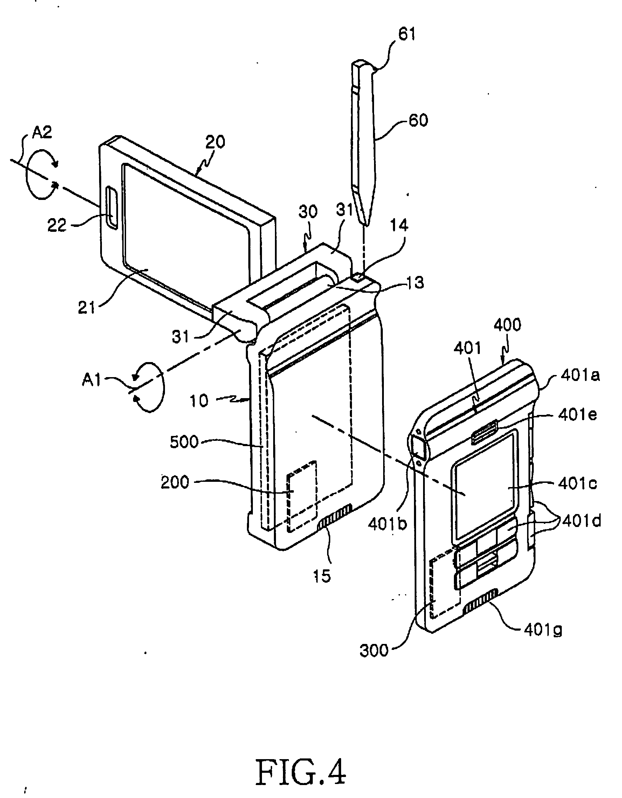

FIGS. 4 to 8 are perspective views of a portable terminal with a detachable sub-housing according to another embodiment of the present invention. Elements having the same reference numerals as in Figs. 1 - 3 correspond to the elements described with respect to Figs. 1 - 3 and therefore have the same features and characteristics.

Referring to FIG. 4, the portable terminal is comprised of the first housing 10, the second housing 20, the hinge housing 30, and a sub-housing 400.

The sub-housing 400 is detachably installed lengthwise on the first housing 10, for use as a portable video phone, a camera phone, and a camcorder.

A first in-built battery 500 is provided in the first housing 10 to supply power. A cylindrical camera module 401 is installed along the first hinge axis A1 in the sub-housing 400. With the sub-housing 400 combined with the first housing 10, an object can be photographed through a camera lens 401 a in the camera module 401.

The second housing 20 is connected to the first housing 10 by the hinge housing 30 such that the second housing 20 can rotate about the first hinge axis A1 to an opened or closed state with respect to the first housing 10.

The pair of hinge arms 31 protrude from both sides of the hinge housing 30 and are combined with the center hinge arm at the upper center of the first housing 10. The side hinge arms 31 and the center hinge arm 13 enable the rotation of the second housing 20. The hinge housing 30 creates the second hinge axis A2 about which the second housing 20 rotates perpendicularly to the first hinge axis A1.

When the user intends to photograph an object in a narrow space, he removes the sub-housing 400 from the first housing 10 as illustrated in FIGS. 4, 5 and 7. Each of the first housing 10 and the sub-housing 400 is provided with a short-range communication module 200 or 300, respectively. As the sub-housing 400 is removed from or attached to the first housing 10, the short-range communication modules 200 and 300 are activated.

The short-distance communication modules 200 and 300 are Bluetooth devices that are meant for short-range wireless communication, eliminating cables typically needed to connect such devices.

The camera module 401 includes the camera lens 401 a at an end and a viewfinder 401 b at the other end.

In this state, the camera module 401 photographs the object and feeds the data of the photographed still image or moving picture to the first housing 10, displaying the data on the LCD 21 of the second housing 20.

Since the sub-housing 400 also has a sub-LCD 401c, the still image or moving picture is displayed on the sub-LCD 401c at the same time.

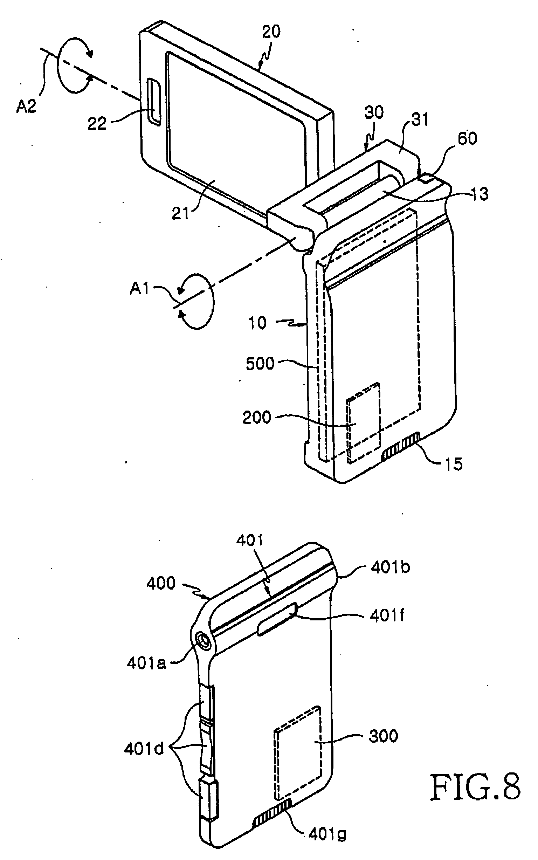

As illustrated in FIG. 8, the user can photograph the object at a desired height and a desired angle in the narrow place, viewing the LCD 21 of the second housing 20 with the first housing 10 held with his one hand and the sub-housing held with his other hand. The photographed still image or moving picture is then displayed on the LCD 21.

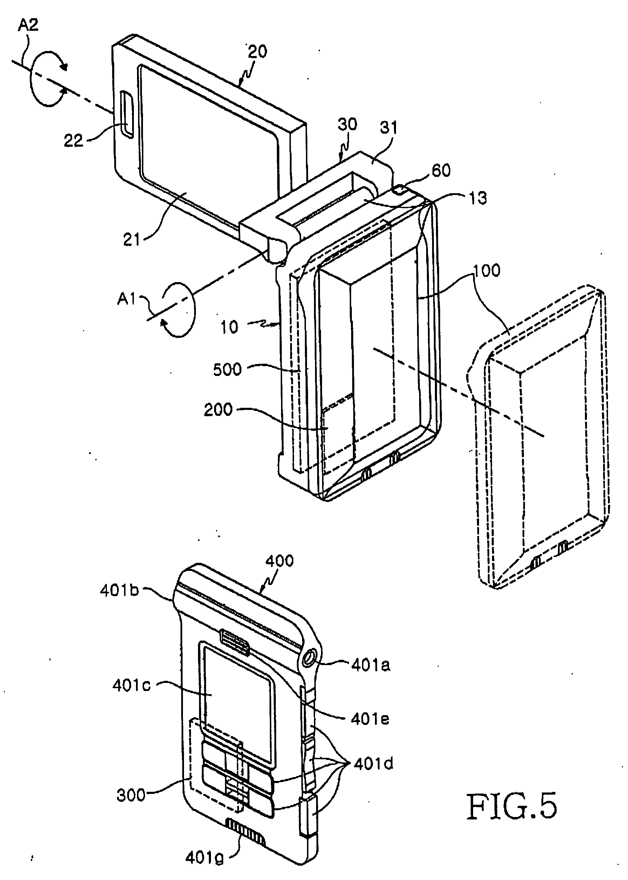

If photographing takes time, a second large-capacity battery 100 is attached to the outer surface of the first housing 10, from which the sub-housing 400 has been removed, as shown in FIG. 5.

With both first and second batteries 500 and 100 supplying power to the first housing 10, long-time digital photographing is possible through the sub-housing 400.

After the photographing is completed, the second battery 100 is removed from the first housing 10 and the sub-housing 400 is attached to the first housing 10. At the same time, the short-range communication modules 200 and 300 are deactivated.

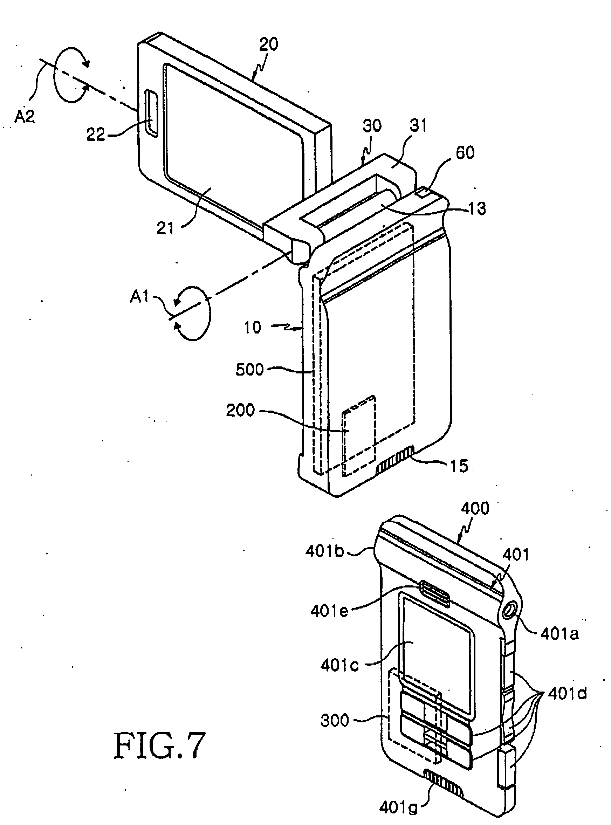

Since first and second connectors 15 and 401g are formed in the first housing 10 and sub-housing 400, respectively, as illustrated in FIGS. 7 and 8, as the sub-housing 400 is mounted to the outer surface of the first housing 10, the first connector 15 electrically contact the second connector 401g and thus the short-range communication modules 200 and 300 are turned off.

The first connector 15 includes a data terminal for data transmission and a power supply terminal for charging the first battery 500 with the second battery 100 and supplying power simultaneously.

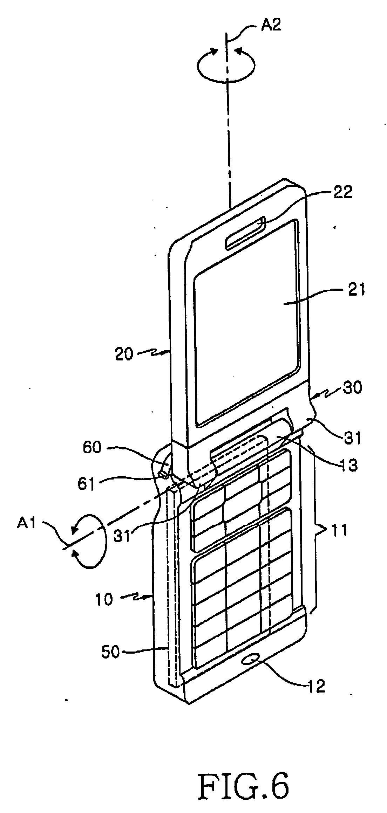

At appropriate positions of an outer surface of the sub-housing 400, a microphone 401f (FIG. 8) is arranged and at least one operation key 401d is arranged on the outer surface or an edge of the sub-housing 400 to improve digital camera/camcorder functionality as the sub-housing 400 is detached.
As illustrated in FIG. 6, the portable terminal can function as a mobile phone.

As described above, the sub-housing 400, having the short-range communication module 200 and the camera module 401, is detachably configured, so that improved digital photography can be realized.

While the invention has been shown and described with reference to certain preferred embodiments thereof, it will be understood by those skilled in the art that various changes in form and details may be made therein without departing from the spirit and scope of the invention as defined by the appended claims.

## Claims

1. Portable terminal comprising:
a first housing (10);
a hinge housing (30)installed at an end of the first housing (10), for defining a first hinge axis (A1) along a width direction of the first housing (10) and a second hinge axis (A2) perpendicular to the first hinge axis;
a second housing (20) connected to the first housing (10) by the hinge housing (30), for rotating about the first hinge axis to an opened state or a closed state with respect to the first housing (10); and
a sub-housing (40) mounted to an outer surface of the first housing (10) and having a camera module (41) along the first hinge axis (A1).

2. Portable terminal of claim 1, further comprising a built-in battery (50) in the first housing (10).

3. Portable terminal according to claim 1, wherein the sub-housing (400) with the camera module (401) is detachably mounted to the outer surface of the first housing (10).

4. The portable terminal of claim 3, wherein the camera module (401) is installed along the first hinge axis (A1) with the sub-housing mounted to the first housing (10), and can be positioned at a desired height and angle when the sub-housing(400) is removed from the first housing (10).

5. The portable terminal of claim 3 or 4, further comprising a built-in battery (500) in the first housing (10), and a detachable large-capacity battery (100) that can be attached to the first housing (10) when the sub-housing (400) is removed.

6. The portable terminal of claim 5, wherein the detachable large-capacity battery (100) attaches in a position formerly occupied by the sub-housing (400).

7. The portable terminal according to one of claims 3 to 6, wherein the first housing (11) comprises a first short-range communication module (200), and the sub-housing (400) further comprises a second short-range communication module (300), for short-range communication between the first housing (10) and the sub-housing (400).

8. Portable terminal according to one of claims 1 to 7, wherein the hinge housing (30) comprises a center hinge arm at the upper center of the first housing (10) and a pair of side hinge arms (31) protruding from both sides of the hinge housing (30) and combined with the center hinge arm (13).

9. Portable terminal according to one of claims 1 to 8, further comprising a touch pen (60) having a protrusion (61) at the top end of the touch pen (60), wherein the first housing (10) comprises a hole (14) for receiving the touch pen with the protrusion (61) of the touch pen (60) retained at the entrance of the hole (14).

10. Portable terminal according to one of claims 1 to 9, wherein the camera module (41,401) comprises a camera lens (41a,401a) at an end of the camera module (41,401) and a viewfinder (41b,401b) at an other end of the camera module (41,401).

11. Portable terminal according to one of claims 1 to 10, wherein the sub-housing (40) further comprises a sub-LCD (41c) and at least one operation key (41d) arranged on an edge of the sub-housing (40).

12. Portable terminal of claim 8, wherein the second hinge (20) housing is rotatable about the second hinge axis(A2), with respect to the first housing (10).

13. The portable terminal of claim 7, wherein as the sub-housing (400) is removed from the first housing (10), the short-range communication modules (200,300) are activated and as the sub-housing (400) is mounted to the first housing (10), the short-range communication modules (200,300) are deactivated.

14. The portable terminal according to one of claims 3 to 6 or 13, wherein the sub-housing (400) further comprises a microphone (401f) positioned on the outer surface of the sub-housing (400).

15. The portable terminal according to one of claims 3 to 6 or 13 to 14, wherein the first housing (10) comprises a first connector (15) and the sub-housing (400) further comprises a second connector (401b), for electric connection between the sub-housing (400) and the first housing (10) when the sub-housing (400) is mounted to the first housing (10).
